# EUROPEAN PATENT APPLICATION

(11) **EP 2 012 497 A1**
(43) Date of publication of application: **07.01.2009**
(21) Application number: 08397514.4
(22) Date of filing: 12.06.2008
(51) Int. Cl.: H04L 29/06

(54) **Route optimization for a Mobile IPv4 system**

(30) Priority: 04.07.2007 FI 20075508
(71) Applicant: Teliasonera AB, 106 63 Stockholm (SE)
(72) Inventor: Korhonen, Jouni, 11100, Riihimäki (FI); Mäkelä, Antti, 33720, Tampere (FI)
(74) Representative: Pursiainen, Timo Pekka

(57) **Abstract**

A telecommunication system comprising: a home agent, a first mobile router administrating a first IP address space and at least a second mobile router administrating a second IP address space; wherein network connections between said home agent and the first and the second mobile router are established via an IPv4-based network; said first and second mobile router being arranged to register their care-of addresses with the home agent. The home agent is arranged to send, upon noticing at least two mobile routers registered with the home agent, at least routing information of the first mobile router to at least the second mobile router, and the second mobile router is arranged to send, upon detecting data transmission destined to the first IP address space administrated by the first mobile router, said data transmission directly to the first mobile router for further forwarding to an IP address of an appropriate node.

## Description

### Field of the invention

The present invention relates to Mobile IP technology, and more particularly to route optimization in Mobile IPv4.

### Background of the invention

Mobile IP technology has proven to become a promising platform for providing a user of a mobile terminal with a seamless mobility support between different communication networks. Its significance will be even more emphasized, when the 3^{rd} generation (3GPP) and the future generation mobile networks are developed towards multi-access networks, which support Mobile IP technology and enable the same network services to be accesses via different access networks.

Mobile IP technology includes two versions: Mobile IP version 4 (Mobile IPv4), which is designed for Internet Protocol version 4 (lPv4), and Mobile IP version 6 (Mobile IPv6), which is designed for Internet Protocol version 6 (lPv6), the next generation Internet Protocol. Mobile IPv6 shares many ideas in the Mobile IPv4 and inherits some new features in IPv6 by further enhancing mobility functions in IPv6.

One of the fundamental features included in Mobile IPv6, but lacking from Mobile IPv4, is the built-in support for route optimization. The route optimization refers to a feature, according to which data packets to a roaming mobile node can be routed using the shortest communications path, thereby allowing reducing network load across the entire Internet on one hand, and avoiding congestion in the home network of the mobile node and enabling the use of lower-performance home agent equipment. In Mobile IPv6, the route optimization is briefly implemented such that the mobile node is required to register its current binding at the correspondent node, whereby packets from the correspondent node can be routed directly to the care-of address of the mobile node by using a new type of IPv6 routing header to route the packet to the mobile node by way of the care-of address indicated in this binding.

This is not enabled in Mobile IPv4, wherein a mobile node operating in a foreign network first obtains a care-of-address from a foreign agent of the foreign network, and then mobile node registers its new care-of-address with its home agent. Thereafter, the home agent sends all data packets destined for the mobile node through an established tunnel to the care-of address, wherefrom each data packet is then delivered to the mobile node. Thus, all data packets destined for the mobile node are routed via the home agent.

However, a commonly known fact is that IPv6 networks and Mobile IPv6 technology are only quite recently introduced and they are not yet deployed in greater scale; i.e. a great majority of IP networks still operate according to IPv4 standards. This widely existing lack of route optimization poses problems particularly to mobile virtual networks operators (MVNOs), which do not have their own mobile network in a particular area, but instead buy network resources from an internet service provider (ISP).

For example, if a MVNO offers services to interconnect different sites or offices of a large company (which offices may geographically be widely, even globally, spread), it is very likely that the MVNO must buy network resources from several ISPs. Then each office has at least one mobile router for managing its IP addresses, but the mobile routers have no knowledge of the existence of mobile routers in other sites or offices. The MVNO cannot rely on that each IP network of the ISPs would support route optimization according to Mobile IPv6. Consequently, all data traffic between the different sites or offices must be routed via a home agent operated by the MVNO. This sets heavy processing load for the home agent equipment, and at the same time, causes unnecessary network load for all MVNOs and ISPs providing the network resources.

### Summary of the invention

Now there has been invented an improved method and technical equipment implementing the method, by which the route optimization problem faced by the MVNOs is at least alleviated. Various aspects of the invention include a method, a telecommunication system and an apparatus, which are characterized by what is stated in the independent claims. Various embodiments of the invention are disclosed in the dependent claims.

According to one aspect, a telecommunication system according to the invention preferably comprises a home agent, a first mobile router administrating a first IP address space and at least a second mobile router administrating a second IP address space; wherein at least some network connections between said home agent and the first and the second mobile router are established via an lPv4-based network; and said first mobile router and said second mobile router are arranged to register their care-of addresses with the home agent according to the binding update procedure of Mobile IPv4. The home agent is further arranged to send, upon noticing that at least two mobile routers are registered with the home agent, at least routing information of the first mobile router to at least the second mobile router, and the second mobile router is arranged to send, upon detecting data transmission destined to the first IP address space administrated by the first mobile router, said data transmission directly to the first mobile router for further forwarding to an IP address of an appropriate node.

According to an embodiment, the routing information includes the first mobile router's identity, care-of-address and the IP address domain under its administration, and the second mobile router is arranged to send said data transmission directly to the care-of-address of the first mobile router.

According to an embodiment, the routing information further includes an instruction from the home agent to at least the second mobile router to establish a direct connection to the first mobile router upon detecting data transmission destined to the first IP address space.

According to an embodiment, the second mobile router is arranged to send said data transmission to the first mobile router via the shortest available communication path.

According to an embodiment, the home agent is arranged to send, upon receiving a new registration of a mobile router, routing information of the new mobile router to at least a second mobile router, preferably to all other mobile routers under surveillance of the home agent.

According to an embodiment, the home agent is arranged to send upon receiving any updated registration information from any mobile router, the routing information of all mobile routers to each mobile router under surveillance of the home agent.

According to an embodiment, said home agent is operated by a mobile virtual network operator, said first mobile router is located in a first communication network and the second mobile router is located in a second communication network.

The arrangement according to the invention provides significant advantages. It provides at least a partial route optimization also for IPv4, wherein the data packets are not routed via the home agent, as supposed in conventional Mobile IPv4 procedure, but directly between the mobile routers. This reduces significantly the load of the home agent, especially in the case of MVNOs. According to an embodiment, the mobile routers remain updated about any changes in routing information of other mobile routers, and thus changes in network topology can be reacted dynamically.

These and other aspects of the invention and the embodiments related thereto will become apparent in view of the detailed disclosure of the embodiments further below.

### List of drawings

In the following, various embodiments of the invention will be described in more detail with reference to the appended drawings, in which
- Fig. 1: shows a typical network arrangement for a mobile virtual networks operator;
- Fig. 2: shows a signalling chart of a route optimization method according to an embodiment of the invention; and
- Fig. 3: shows a home agent device according to an embodiment of the invention in a reduced block chart.

### Description of embodiments

In the following, the invention will be illustrated by referring to an example, wherein IP mobility is provided for a mobile virtual networks operator (MVNO). It is, however, noted that the invention is not limited to MVNOs solely, but it can be implemented in any Mobile IPv4 environment including several mobile routers.

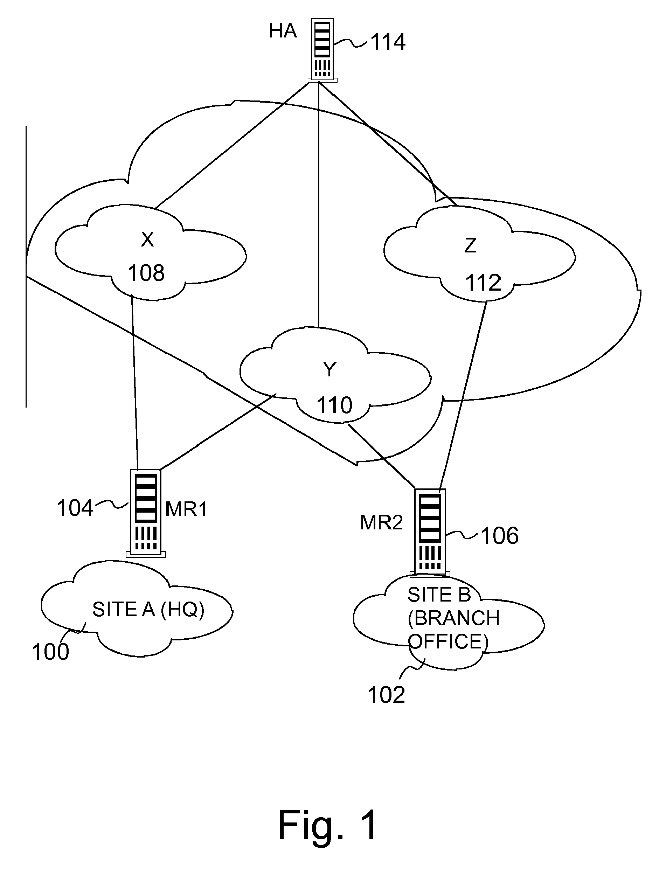

Fig. 1 illustrates a typical network arrangement for a MVNO in a simplified manner. In this example, the MVNO offers services for a company to interconnect two sites of the company; site A (100), which is denoted as a headquarters, and site B (102), which is denoted as a branch office. Site A comprises a mobile router A (104), which is arranged to manage IP mobility within the network of site A. In a similar manner, Site B comprises a mobile router B (106), which is arranged to manage IP mobility within the network of site B. The MVNO offers its services via networks of a plurality of ISPs; in this example three network operators are depicted: network operator X (108), network operator Y (110) and network operator Z (112). The site A can be connected either via the network operator X (108) or the network operator Y (110), and the site B can be connected either via the network operator Y (110) or the network operator Z (112). The MVNO itself maintains a Mobile IP Home Agent server (114) in its home network.

From the IP mobility point of view, a mobile router operates like a mobile node: a mobile router operating in a foreign network first obtains a care-of-address from a foreign agent of the foreign network, and then the mobile router registers its new care-of-address with its home agent according to the binding update procedure of Mobile IPv4. The home agent then establishes a Mobile IP tunnel from the home agent to the foreign agent, which forwards the data packets to the mobile router. The advantage of using a mobile router is that the nodes connected to the mobile router do not necessarily have to support Mobile IP at all, but they can connect to the mobile router using e.g. Ethernet protocol or any other connectivity method.

If the mobile router registers itself first with the foreign agent, then for delivering data packets to the nodes behind the mobile router, a second tunnel is established inside the first tunnel. The second tunnel is established between the home agent and the mobile router. Thereafter, the home agent sends all data packets destined for a mobile node through this double tunnelling arrangement, whereby two separate header fields are included in the data packets. An outer header is used to deliver the packets to the foreign agent, which is the only node in the foreign network knowing the location of the mobile router. The foreign agent interprets the outer header, removes it and delivers the data packet still including the inner header to the care-of address of the mobile router. The mobile router then removes the inner header and delivers the data packet to the appropriate node connected to the mobile router.

If the mobile router registers itself directly with the home agent, then it is not mandatory to use this double tunnelling arrangement, but only a single tunnel can be established between the home agent and the mobile router. Naturally, it is still obligatory to the double tunnelling, if considered necessary. However, in these arrangements regardless whether double tunnelling is used or not, all data packets destined for the nodes behind the mobile router are routed via the home agent.

Now, for reducing the load of the home agent and for providing at least a partial route optimization also for IPv4, an embodiment of the invention discloses a solution, wherein the routing information maintained by the home agent is further delivered to the mobile routers for establishing direct connections between the mobile routers. This solution is based on the fact that the home agent maintains information about each mobile router connected to it. When a mobile router registers with its home agent, the mobile router informs its identity, care-of-address and the IP address domain under its administration to the home agent. The IP address domain may be, for example, all IP addresses or only a certain part of IP addresses of a site or an office of a company. Based on this information, the home agent knows, upon receiving data packets destined to a certain IP address, to which mobile router the data packets should be forwarded.

According to an embodiment, the home agent sends at least this set of information (a first mobile router's identity, care-of-address and the IP address domain under its administration) to at least a second mobile router. At the same time, provided that the second mobile router does not include predefined settings for utilising this routing information, the home agent may instruct the second mobile router to establish direct connection to the care-of-address of the first mobile router, if there is a data transmission directed to the first mobile router's IP address domain. Regarding the example of Fig. 1, this could mean that the home agent sends the identity of the mobile router A, its care-of-address and its IP address domain, i.e. IP addresses of site A, to the mobile router B. Then, whenever there is data packet transmission destined from the site B towards the site A, the mobile router B registers itself with the mobile router A and then sends the data packet transmission directly to the care-of-address of the mobile router A. In the example of Fig. 1, the mobile router B sends the data packet transmission preferably via the network operator Y (110), which is a common access network for both the site A and the site B, thereby ensuring the shortest available communications path and avoiding any additional address resolving procedures typically required on inter-network connections.

As a part of their registration process, the mobile routers preferably authenticate each other before direct mutual data transmission may start. The authentication could be based on, for example, preshared secrets delivered by the MVNO to the mobile routers in forehand or the mobile routers may be arranged to carry out a dynamic key exchange, for example in similar manner as in the return routability test of Mobile IPv6.

According to an embodiment, the home agent sends, upon receiving a new registration of a mobile router, this updated information to at least a second mobile router, but possibly to all other mobile routers under surveillance of the home agent (except to the newly registered). This new registration may be a totally new mobile router registering to the network, or a previously registered mobile router changing its location (a changed care-of-address and/or the IP address domain under its administration).

According to an embodiment, the home agent sends, upon receiving any updated registration information from any mobile router, the routing information of all mobile routers to each mobile router. This way all mobile routers remain updated of any changes of routing information, and thus it can be ensured that the route optimization is always carried out according to updated information and any changes in network topology can be reacted dynamically.

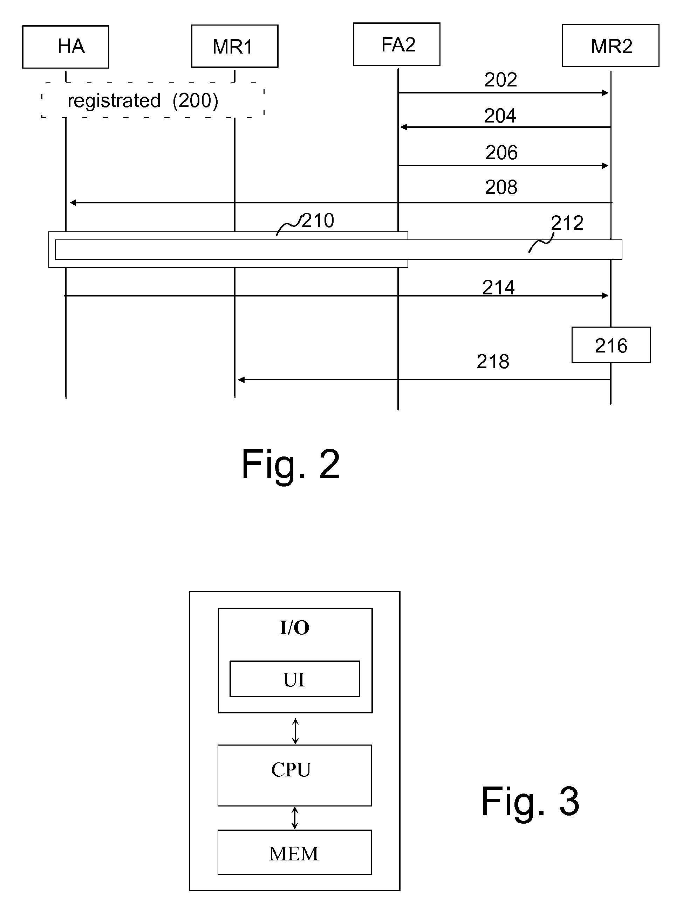

Some embodiments of the invention are further illustrated in the signalling chart of Fig. 2 disclosing a home agent (HA), a first mobile router (MR1), a second mobile router (MR2) and its foreign agent (FA2). Let us assume that as a starting point of the procedure in Fig. 2, the first mobile router MR1 has already registered with the home agent HA, which is depicted as a dot-lined action with reference number 200. Therefore, there is no need to describe its registration procedure and a foreign agent involved therein, especially since it is similar to the registration process of the second mobile router MR2 described below.

Meanwhile, the second mobile router MR2 appears in the vicinity of the foreign agent FA2 and notices the agent advertisement message (202) sent by the foreign agent. The second mobile router MR2 detects that it has moved to a foreign network, announces (204) its presence to the foreign agent FA2, and obtains a care-of-address (206) from the foreign agent FA2. Then the second mobile router MR2 registers (208) its new care-of-address with its home agent HA. In response to the registration of the second mobile router MR2, the home agent HA carries out the establishment of the double tunnels in conventional manner, as described above. The first (outer) tunnel (210) is established between the home agent HA and the foreign agent FA2, and the second (inner) tunnel (212) is established between the home agent HA and the second mobile router MR2.

Once the second mobile router MR2 has also been registered with and connected to the home agent HA, the home agent HA now sends (214) routing information of first mobile router MR1 including preferably the first mobile router's identity, care-of-address and the IP address domain under its administration, the transmission (214) also including instructions for the second mobile router MR2 to establish direct connection to the care-of-address of the first mobile router MR1, if detecting a data transmission directed to the first mobile router's IP address domain.

After a while, the second mobile router MR2 detects (216) a data transmission originating from one of the nodes under its administration and destined to the first mobile router's IP address domain. The second mobile router MR2 also notices that in such a case, it is instructed to establish direct connection to the care-of-address of the first mobile router MR1. Thus, the second mobile router MR2 forwards (218) the data transmission directly to the care-of-address of the first mobile router MR1, which routes the data packets further to an appropriate node under its administration.

Accordingly, the data packets are not routed via the home agent, as supposed in conventional Mobile IPv4 procedure, but directly between the mobile routers. This provides at least a partial route optimization also for IPv4, and reduces significantly the load of the home agent, especially in the case of MVNOs. According to an embodiment, the mobile routers remain updated about any changes in routing information of other mobile routers, and thus changes in network topology can be reacted dynamically.

A skilled man appreciates that any of the embodiments described above may be implemented as a combination with one or more of the other embodiments, unless there is explicitly or implicitly stated that certain embodiments are only alternatives to each other.

The above-described procedure could be referred as home agent assisted route optimization, since the home agent makes the decision, whether and when it is necessary send routing information of a mobile router to other mobile routers under surveillance of the home agent. The home agent may preferably be a server connected to an IP network. Accordingly, the server comprises, as illustrated in Fig. 3, memory MEM, a user interface Ul, I/O means I/O for arranging data transmission with other devices, and one or more central processing units CPU comprising at least one processor. The memory MEM includes a non-volatile portion for storing the applications controlling the central processing unit CPU and other data to be stored and a volatile portion to be used for temporary data processing.

The functionalities of the invention are preferably implemented in the server as a computer program which, when executed in a central processing unit CPU, affects the server to implement procedures of the invention. Functions of the computer program SW may be distributed to several separate program components communicating with one another. The computer software may be stored into any memory means, such as the hard disk of a PC or a CD-ROM disc, from where it can be loaded into the memory of server. The computer software can also be loaded through a network, for instance using a TCP/IP protocol stack.

It is obvious that the present invention is not limited solely to the above-presented embodiments, but it can be modified within the scope of the appended claims.

## Claims

1. A method for route optimization in an IPv4-based network, the network comprising a home agent (HA), a first mobile router (MR1) administrating a first IP address space and at least a second mobile router (MR2) administrating a second IP address space, the method comprising:
registering (200, 208) care-of addresses of said first mobile router (MR1) and said second mobile router (MR2) with the home agent (HA) according to the binding update procedure of Mobile IPv4;
**characterized by**
upon noticing that at least two mobile routers are registered with the home agent, the home agent (HA) sending (214) at least routing information of the first mobile router (MR1) to at least the second mobile router (MR2), and
upon detecting (216) at the second mobile router (MR2) data transmission destined to the first IP address space administrated by the first mobile router (MR1), sending (218) said data transmission from the second mobile router (MR2) directly to the first mobile router (MR1) for further forwarding to an IP address of an appropriate node.

2. The method according to claim 1, **characterized in that** the routing information includes the first mobile router's identity, care-of-address and the IP address domain under its administration, the method further comprising:
sending (218) said data transmission from the second mobile router (MR2) directly to the care-of-address of the first mobile router (MR1).

3. The method according to claim 1 or 2, **characterized in that** the routing information further includes an instruction from the home agent (HA) to at least the second mobile router (MR2) to establish a direct connection to the first mobile router (MR1) upon detecting data transmission destined to the first IP address space.

4. The method according to any preceding claim, **characterized by**
sending (218) data transmission between the first mobile router (MR1) and the second mobile router (MR2) via the shortest available communication path.

5. The method according to any preceding claim, **characterized by**
sending from the home agent, upon receiving a new registration of a mobile router, routing information of the new mobile router to at least a second mobile router, preferably to all other mobile routers under surveillance of the home agent.

6. The method according to any preceding claim, **characterized by**
sending from the home agent, upon receiving any updated registration information from any mobile router, the routing information of all mobile routers to each mobile router under surveillance of the home agent.

7. The method according to any preceding claim, **characterized in that**
said home agent (HA) is operated by a mobile virtual network operator, said first mobile router (MR1) is located in a first communication network and the second mobile router (MR2) is located in a second communication network.

8. A telecommunication system comprising:
a home agent (HA), a first mobile router (MR1) administrating a first IP address space and at least a second mobile router (MR2) administrating a second IP address space; wherein
at least some network connections between said home agent and the first and the second mobile router are established via an IPv4-based network;
said first mobile router (MR1) and said second mobile router (MR2) being arranged to register (200, 208) their care-of addresses with the home agent (HA) according to the binding update procedure of Mobile IPv4; **characterized in that**
the home agent (HA) is arranged to send (214), upon noticing that at least two mobile routers are registered with the home agent, at least routing information of the first mobile router (MR1) to at least the second mobile router (MR2), and
the second mobile router (MR2) is arranged to send (218), upon detecting (216) data transmission destined to the first IP address space administrated by the first mobile router (MR1), said data transmission directly to the first mobile router (MR1) for further forwarding to an IP address of an appropriate node.

9. The telecommunication system according to claim 8, **characterized in that** the routing information includes the first mobile router's identity, care-of-address and the IP address domain under its administration, and
the second mobile router (MR2) is arranged to register itself with the first mobile router (MR1), in response to said registration
the first mobile router (MR1) and the second mobile router (MR2) are arranged to send (218) data transmission directly to each other's care-of-addresses without routing said data transmission via the home agent (HA).

10. The telecommunication system according to claim 8 or 9, **characterized in that** the routing information further includes an instruction from the home agent (HA) to at least the second mobile router (MR2) to establish a direct connection to the first mobile router (MR1) upon detecting data transmission destined to the first IP address space.

11. The telecommunication system according to any of the claims 8 - 10, **characterized in that**
the first mobile router (MR1) and the second mobile router (MR2) are arranged to send (218) said data transmission to each other via the shortest available communication path.

12. The telecommunication system according to any of the claims 8 - 11, **characterized in that**
the home agent (HA) is arranged to send, upon receiving a new registration of a mobile router, routing information of the new mobile router to at least a second mobile router, preferably to all other mobile routers under surveillance of the home agent.

13. The telecommunication system according to any of the claims 8 - 12, **characterized in that**
the home agent (HA) is arranged to send upon receiving any updated registration information from any mobile router, the routing information of all mobile routers to each mobile router under surveillance of the home agent.

14. The telecommunication system according to any of the claims 8-13, **characterized in that**
said home agent (HA) is operated by a mobile virtual network operator, said first mobile router (MR1) is located in a first communication network and the second mobile router (MR2) is located in a second communication network.

15. An apparatus capable of operating as a home agent (HA) in an IPv4-based network, the apparatus being arranged to
register care-of addresses of a first mobile router (MR1) administrating a first IP address space and at least a second mobile router (MR2) administrating a second IP address space according to the binding update procedure of Mobile IPv4; **characterized in that**
the apparatus (HA) is further arranged to send (214), upon noticing that at least two mobile routers are registered with the home agent, at least routing information of the first mobile router (MR1) to at least the second mobile router (MR2) in order to route data transmission destined from the second IP address space administrated by the second mobile router (MR2) to the first IP address space administrated by the first mobile router (MR1) directly to the first mobile router (MR1) for further forwarding to an IP address of an appropriate node.

16. The apparatus according to claim 15, **characterized in that** the routing information includes the first mobile router's identity, care-of-address and the IP address domain under its administration.

17. The apparatus according to claim 16, **characterized in that** the routing information further includes an instruction from the home agent (HA) to at least the second mobile router (MR2) to establish a direct connection to the care-of-address of the first mobile router (MR1) upon detecting data transmission destined to the first IP address space.

18. The apparatus according to any of the claims 15 - 17, **characterized in that**
the apparatus is arranged to send, upon receiving a new registration of a mobile router, routing information of the new mobile router to at least a second mobile router, preferably to all other mobile routers under surveillance of the apparatus.

19. The apparatus according to any of the claims 15 - 18, **characterized in that**
the apparatus is arranged to send upon receiving any updated registration information from any mobile router, the routing information of all mobile routers to each mobile router under surveillance of the apparatus.

20. The apparatus according to any of the claims 15 - 19, **characterized in that**
said apparatus is operated by a mobile virtual network operator, and
said apparatus is arranged to establish a connection to said first mobile router (MR1) via a first communication network and to the second mobile router (MR2) via a second communication network.
